# EUROPÄISCHE PATENTSCHRIFT

(11) **EP 1 591 651 B1**
(45) Veröffentlichungstag und Bekanntmachung des Hinweises auf die Patenterteilung: **12.08.2009**
(21) Anmeldenummer: 04101699.9
(22) Anmeldetag: 23.04.2004
(51) Int. Cl.: F02D 41/40, F02D 13/02

(54) **Verfahren zur Erhöhung des Drehmomentes bei einer direkteinspritzenden Brennkraftmaschine**
Method for increasing the torque in a direct injection internal-combustion engine
Méthode pour augmenter le couple d'un moteur à combustion interne à injection directe

(43) Veröffentlichungstag der Anmeldung: 02.11.2005
(73) Patentinhaber: Ford Global Technologies, LLC, A subsidary of Ford Motor Company, Dearborn, MI 48126 (US)
(72) Erfinder: Ruhland, Helmut Dr., 52249 Eschweiler (DE); Breuer, Albert, 50769 Köln (DE)
(74) Vertreter: Drömer, Hans-Carsten

(56) Entgegenhaltungen:
- EP-A- 1 085 187
- EP-A- 1 085 191
- DE-A- 10 217 238

## Beschreibung

Die Erfindung betrifft ein Verfahren zur Erhöhung des Drehmomentes bei einer direkteinspritzenden Brennkraftmaschine, die mit einem Abgasturbolader ausgestattet ist und bei der der Ladungswechsel mittels Ein- und Auslaßventilen gesteuert wird, wobei neben einer Haupteinspritzung, in deren Rahmen der Kraftstoff für die Hauptverbrennung bereitgestellt wird, mindestens eine Nacheinspritzung in einen oder mehrere Zylinder der Brennkraftmaschine vorgenommen wird und die im Rahmen der mindestens einen Nacheinspritzung zugeführte nacheingespritzte Kraftstoffmenge mit zusätzlicher Verbrennungsluft verbrannt wird, die nicht aus der ursprünglichen Zylinderfüllung stammt, sondern separat zugeführt wird.

Ein derartiges Verfahren wird beispielweise in der deutschen Offenlegungsschrift DE 102 17 238 A1 beschrieben.

Die Haupteinspritzung kann sich dabei aus einer Vielzahl einzelner Einspritzungen zusammensetzen. So wird nach dem Stand der Technik beispielsweise bei Dieselmotoren der Kraftstoff mittels mehrerer Einspritzungen kleinerer Kraftstoffmengen dem Brennraum zugeführt, um auf diese Weise den abrupten Druckanstieg infolge der Selbstentzündung des Kraftstoffes abzumildern und dadurch dem sogenannten Dieselnageln entgegenzuwirken.

Im Rahmen der vorliegenden Erfindung ist deshalb der Begriff der Haupteinspritzung dahingehend zu verstehen, daß im Rahmen der Haupteinspritzung die Kraftstoffmenge für die Hauptverbrennung bereitgestellt wird.

In der EP 0 621 400 A1 wird eine direkteinspritzende Brennkraftmaschine beschrieben, bei der eine Nacheinspritzung zur Reduzierung der Stickoxide im Abgas vorgenommen wird. Dabei wird zusätzlich zur Haupteinspritzung frühestens im Bereich der Endphase der Verbrennung, nachdem die Kurbelwelle ihren oberen Totpunkt durchschritten hat, Kraftstoff nacheingespritzt, wobei gezielt nur ein Teil des nacheingespritzten Kraftstoffes verbrannt wird und der restliche Kraftstoffanteil zur Reduktion der Schadstoffe, insbesondere der Stickoxide, im Katalysator dient.

Ein Verfahren zur Erhöhung des Drehmomentes bei einer direkteinspritzenden Brennkraftmaschine wird auch in der deutschen Offenlegungsschrift DE 199 44 190 A1 beschrieben, auf die weiter unten noch eingegangen wird. Vorher sollen noch einige Ausführungen zur Abgasturboaufladung und ihrer Problematik im allgemeinen gemacht werden.

In den letzten Jahren hat sich eine Entwicklung hin zu kleinen, hochaufgeladenen Motoren vollzogen, wobei die Aufladung in erster Linie ein Verfahren zur Leistungssteigerung ist, bei dem die für den motorischen Verbrennungsprozeß benötigte Luft verdichtet wird. Die wirtschaftliche Bedeutung dieser Motoren für die Automobilbauindustrie nimmt weiter ständig zu.

Ein typischer Vertreter der kleinen, hochaufgeladenen Motoren ist ein Ottomotor mit Abgasturboaufladung, bei der die Abgasenergie zur Verdichtung der Verbrennungsluft eingesetzt wird, und der zusätzlich über eine Ladeluftkühlung verfügt, mit der die komprimierte Verbrennungsluft vor Eintritt in den Brennraum runtergekühlt wird. Der Ladeluftkühler senkt die Lufttemperatur und steigert damit die Dichte der Luft, wodurch auch der Kühler zu einer besseren Füllung des Brennraums mit Luft d.h. zu einer größeren Luftmasse beiträgt.

Dabei wird in der Regel ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Vorteile des Abgasturboladers beispielsweise im Vergleich zu herkömmlichen mechanischen Ladern besteht darin, daß keine mechanische Verbindung zwischen Lader und Brennkraftmaschine besteht bzw. erforderlich ist.

Wie oben bereits ausgeführt, hat in den letzten Jahren der Einsatz von Abgasturboladern stark zugenommen, wobei ein Ende dieser Entwicklung nicht abzusehen ist. Die Gründe hierfür sind vielschichtig und werden im folgenden kurz dargelegt.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck gesteigert werden.

Zwar kann die Leistung einer Brennkraftmaschine grundsätzlich auch durch Erhöhung der Drehzahl n gesteigert werden. Es muß aber berücksichtigt werden, daß die mechanische Belastung der Brennkraftmaschine zwar proportional zum effektiven Mitteldruck pₘₑ ist, welcher durch die Aufladung gesteigert werden kann, aber proportional zum Quadrat der Drehzahl zunimmt, so daß es oberhalb einer bestimmten Drehzahl hinsichtlich der Materialausnutzung sinnvoller ist, die Leistung mittels Aufladung d.h. über die Steigerung des Mitteldruckes pₘₑ anzuheben.

Die Aufladung ist daher ein geeignetes Mittel, bei unverändertem Hubraum die Leistung einer Brennkraftmaschine zu steigern, oder bei gleicher Leistung den Hubraum zu reduzieren. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Dies unterstützt das ständige Bemühen in der Entwicklung von Verbrennungsmotoren, aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, den Kraftstoffverbrauch zu minimieren, d.h. den Wirkungsgrad der Brennkraftmaschine zu verbessern. Ein weiteres grundsätzliches Ziel ist es, die Schadstoffemissionen zu reduzieren. Bei der Lösung dieser Aufgaben kann die Aufladung der Brennkraftmaschine ebenfalls zielführend sein. Bei gezielter Auslegung der Aufladung können nämlich Vorteile im Wirkungsgrad und bei den Abgasemissionen erzielt werden.

Schwierigkeiten bereitet insbesondere die Auslegung des Abgasturboladers, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet. Dieser Effekt ist unerwünscht, da der Fahrer im Vergleich mit einem nicht aufgeladenen Motor gleicher Maximalleistung auch im unteren Drehzahlbereich ein entsprechend großes Drehmoment erwartet. Das sogenannte Turboloch bei niedrigen Drehzahlen zählt daher auch zu den gravierendsten Nachteilen der Abgasturboaufladung.

Verständlich wird dieser Drehmomentabfall, wenn berücksichtigt wird, daß das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, daß zu niedrigeren Drehzahlen hin das Ladedruckverhältnis ebenfalls abnimmt, was gleichbedeutend ist mit einem Drehmomentabfall.

Grundsätzlich könnte dabei dem Abfall des Ladedruckes durch eine Verkleinerung des Turbinenquerschnittes und der damit einhergehenden Steigerung des Turbinendruckverhältnisses entgegengewirkt werden. Abgasturbolader mit einer variablen Turbinengeometrie werden bei Dieselmotoren eingesetzt, sind aber wegen ihrer Komplexität sehr kostenintensiv und bei Ottomotoren aufgrund der prinzipbedingt höheren Abgastemperaturen derzeit noch nicht im Serieneinsatz.

In der Praxis führen aber die beschriebenen Zusammenhänge dazu, daß ein möglichst kleiner Abgasturbolader d.h. ein Abgasturbolader mit einem möglichst kleinen Turbinenquerschnitt eingesetzt wird. Letztendlich wird damit dem Drehmomentabfall nur in geringem Maße entgegengewirkt und der Drehmomentabfall weiter zu geringeren Drehzahlen hin verschoben. Zudem sind dieser Vorgehensweise d.h. der Verkleinerung des Turbinenquerschnittes Grenzen gesetzt, da die gewünschte Aufladung und Leistungssteigerung auch bei hohen Drehzahlen uneingeschränkt und in dem gewünschten Maße möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung, wobei die Abgasabblasung mittels Ladedruck oder mittels Abgasdruck gesteuert werden kann.

Bei Dieselmotoren kann eine kleine Auslegung des Turbinenquerschnittes und die gleichzeitige Begrenzung des Ladedruckes durch Abregelung der Brennstoffmasse bei hohen Drehzahlen zielführend sein. Die Möglichkeiten zur Leistungssteigerung mittels Abgasturboaufladung werden dabei aber nicht voll ausgeschöpft.

Der Abgasturbolader kann aber auch auf hohe Drehzahlen abgestimmt mit einem großen Turbinenquerschnitt ausgelegt werden. Dabei wird das Saugsystem dann in der Weise gestaltet, daß durch Wellenvorgänge bei niedrigen Drehzahlen eine dynamische Aufladung erfolgt. Nachteilig ist dabei der hohe Bauaufwand und das träge Verhalten bei Drehzahländerungen.

Die Drehmomentcharakteristik einer aufgeladenen Brennkraftmaschine kann des weiteren durch eine Registeraufladung verbessert werden. Dabei werden mehrere parallel geschaltete Turbolader mit entsprechend kleinen Turbinenquerschnitten mit steigender Last zugeschaltet.

Das in der deutschen Offenlegungsschrift DE 199 44 190 A1 beschriebene Verfahren sieht eine Nacheinspritzung von Kraftstoff in einen oder mehrere Zylinder der Brennkraftmaschine vor, um die Drehmomentcharakteristik einer aufgeladenen Brennkraftmaschine zu verbessern.

Dem beschriebenen Verfahren liegt dabei die Aufgabe zugrunde, das Ansprechverhalten der Brennkraftmaschine im unteren Drehzahlbereich zu verbessern, insbesondere der beim Anfahren beobachteten Drehmomentschwäche entgegenzuwirken, die bei niedrigen Drehzahlen durch den zu geringen Abgasmassenstrom bzw. die zu geringe Abgasenergie hervorgerufen wird.

Erreicht werden soll dies mit einer Nacheinspritzung von zusätzlichem Kraftstoff, durch dessen Verbrennung die Enthalpie des Abgasstromes für die Turbine des Abgasturboladers unmittelbar vor und während des Anfahrvorganges sprungartig erhöht wird, so daß das Ansprechverhalten der Brennkraftmaschine durch den ebenfalls gesteigerten Ladedruck verbessert wird.

Hierzu wird die Brennkraftmaschine nicht stöchiometrisch, sondern mager d. h. mit einem Luftüberschuß betrieben. Dieser Luftüberschuß dient der Oxidation d. h. der Verbrennung des nacheingespritzten Kraftstoffes, wobei das aus Luftüberschuß und nacheingespritztem Kraftstoff gebildete Gemisch infolge der in demselben Zylinder noch ablaufenden Hauptverbrennung bzw. der hohen Temperaturen der dabei gebildeten Verbrennungsgase entzündet wird.

Im übrigen liegt der Schwerpunkt der DE 199 44 190 A1 auf der Bereitstellung einer Steuerung für die Zu- und Abschaltung der Nacheinspritzung, insbesondere auch darauf, ein Verfahren aufzuzeigen, mit dem ein bevorstehender Anfahrvorgang frühzeitig erkannt werden kann, so daß entsprechend einem verbesserten Ansprechverhalten das infolge der Nacheinspritzung erhöhte Drehmomentangebot rechzeitig zu Verfügung gestellt werden kann.

Der Vorteil des in der DE 199 44 190 A1 beschriebenen Verfahrens liegt darin, daß keine zusätzlichen Bauteile zur Durchführung des Verfahrens erforderlich sind und die Drehmomentcharakteristik alleine durch eine gezielte und bedarfsgerechte Steuerung der Verbrennung in Gestalt einer Nacheinspritzung verbessert wird. Die Realisierung dieses Verfahrens ist deshalb mit wenig Aufwand möglich und eignet sich daher insbesondere zur Nachrüstung bereits auf dem Markt befindlicher Brennkraftmaschinen.

Nachteilig hingegen ist, daß das Verfahren Verbrennungsluft nutzt, die aus der ursprünglichen Zylinderfüllung stammt und die während der überstöchiometrisch ablaufenden Hauptverbrennung zunächst ungenutzt bleibt. Im Rahmen der Hauptverbrennung wird weniger Kraftstoff eingespritzt als die vorhandene Verbrennungsluft zulassen würde d. h. der Kraftstoffumsatz der Hauptverbrennung wird gezielt gesenkt, um für die spätere Nachverbrennung des nacheingespritzten Kraftstoffes Verbrennungsluft bereitstellen zu können.

Im Grunde genommen wird dabei der Verbrennungsschwerpunkt nur um einen gewissen Betrag °KW nach spät verschoben. Dies kann aber auch in einfacher Weise und vorteilhafter durch eine Spätverstellung des Zündwinkels erreicht werden. Genau dies geschieht aber bei Turbomotoren der neueren Generation ohnehin. Bei derartig abgestimmten Brennkraftmaschinen kann mit dem in der DE 199 44 190 A1 beschriebenen Verfahren keine zusätzliche Drehmomentsteigerung mehr erzielt werden. Wird nämlich der Verbrennungsschwerpunkt zu weit nach hinten verschoben, durch welche Maßnahme auch immer, sinkt das Drehmoment wieder.

Vor diesem Hintergrund ist es die Aufgabe der vorliegenden Erfindung, ein Verfahren zur Erhöhung des Drehmomentes bei einer direkteinspritzenden Brennkraftmaschine mit Abgasturbolader bereitzustellen, mit dem die nach dem Stand der Technik bekannten Nachteile überwunden werden, und das insbesondere zu einer signifikanten Drehmomentsteigerung im unteren Drehzahlbereich führt.

Gelöst wird diese Aufgabe durch ein Verfahren zur Erhöhung des Drehmomentes bei einer direkteinspritzenden Brennkraftmaschine, die mit einem Abgasturbolader ausgestattet ist und bei der der Ladungswechsel mittels Ein- und Auslaßventilen gesteuert wird, wobei neben einer Haupteinspritzung, in deren Rahmen der Kraftstoff für die Hauptverbrennung bereitgestellt wird, mindestens eine Nacheinspritzung in einen oder mehrere Zylinder der Brennkraftmaschine vorgenommen wird und die im Rahmen der mindestens einen Nacheinspritzung zugeführte nacheingespritzte Kraftstoffmenge mit zusätzlicher Verbrennungsluft verbrannt wird, die nicht aus der ursprünglichen Zylinderfüllung stammt, sondern separat zugeführt wird, und das dadurch gekennzeichnet ist, daß
■ die Verbrennung des nacheingespritzten Kraftstoffes im Abgastrakt vorgenommen wird und
■ die nacheingespritzte Kraftstoffmenge mittels der Verbrennungsgase eines anderen Zylinders der Brennkraftmaschine im Abgastrakt gezündet wird.

Das erfindungsgemäße Verfahren stellt für die Verbrennung des nacheingespritzten Kraftstoffes, die als eine zweite unabhängige Verbrennung neben der Hauptverbrennung angesehen werden kann, in einem separaten Verfahrensschritt zusätzliche Luft zur Verfügung, wobei diese Luft - anders als bei dem in der DE 199 44 190 A1 beschriebenen Verfahren - nicht im Rahmen des vorangegangenen Ladungswechsels als Zylinderfüllung dem Brennraum zugeführt wird d.h. nicht aus der ursprünglichen Zylinderfüllung stammt. Auf welche unterschiedlichen Weisen die Zuführung dieser zusätzlichen Verbrennungsluft erfolgen kann, wird im Rahmen der Beschreibung der bevorzugten Ausführungsformen näher erörtert.

Durch die Verbrennung des nacheingespritzten Kraftstoffes mit der zusätzlichen Verbrennungsluft wird die in diesem Kraftstoff chemisch gebundene Energie freigesetzt und zur Erhöhung der Enthalpie der Verbrennungsgase und damit des Abgasstromes verwendet. Der heißere und damit energiereichere Abgasstrom sorgt für ein höheres Turbinendruckverhältnis und damit auch für einen höheren Ladedruck, der für eine bessere Aufladung und damit letztendlich für eine Drehmomentsteigerung sorgt.

Die nacheingespritzte Kraftstoffmenge wird mittels der Verbrennungsgase eines anderen Zylinders der Brennkraftmaschine im Abgastrakt gezündet wird.

Die in einem Zylinder durch die Hauptverbrennung generierten Verbrennungsgase sind in der Regel bereits über die Auslaßventile im Rahmen des Ladungswechsels in den Abgastrakt ausgeschoben worden, so daß sie nicht mehr zur Zündung des in denselben Zylinder nacheingespritzten Kraftstoffes zur Verfügung stehen. Gegebenenfalls sind die noch während der Nacheinspritzung im Zylinder verbliebenen Verbrennungsgase auch bereits zu sehr abgekühlt.

Die Verbrennungsgase der Hauptverbrennung eines bestimmten Zylinders können dennoch in vorteilhafter Weise zur Zündung von nacheingespritztem Kraftstoff herangezogen werden, wenn auch nicht zur Zündung des Kraftstoffes, der in diesen bestimmten Zylinder nacheingespritzt wird, sondern zur Zündung einer in einen anderen Zylinder nacheingespritzten Kraftstoffmenge.

Dabei wird die nacheingespritzte Kraftstoffmenge eines Zylinders durch die heißen Verbrennungsgase eines anderen Zylinders im Abgastrakt gezündet. Vorteilhaft ist diese Art der Zündung nicht nur, weil sie ohne Vornahme besonderer Maßnahmen gewissermaßen von selber abläuft, sondern auch deshalb, weil die Erhöhung der Abgasenthalpie unmittelbar im Abgastrakt vor der Turbine und damit möglichst effizient initiiert wird.

Dadurch wird die erste der Erfindung zugrunde liegende Aufgabe gelöst, nämlich ein Verfahren zur Erhöhung des Drehmomentes bei einer direkteinspritzenden Brennkraftmaschine mit Abgasturbolader bereitzustellen, das insbesondere zu einer signifikanten Drehmomentsteigerung im unteren Drehzahlbereich führt.

Insbesondere sind keine konstruktiven Veränderungen der Brennkraftmaschine und/oder der benachbarten Aggregate erforderlich. Die effektivere Aufladung der Brennkraftmaschine im unteren Drehzahlbereich erfolgt allein mit Hilfe des erfindungsgemäßen Verfahrens d. h. einer gezielten Steuerung der Nacheinspritzung und Zündung des nacheingespritzten Kraftstoffes.

Vorteilhaft sind Ausführungsformen des Verfahrens, bei denen die zusätzliche Verbrennungsluft ganz oder teilweise während einer Ventilüberschneidungphase, bei der sowohl die Einlaßventile als auch die Auslaßventile geöffnet sind, infolge eines positiven Spüldruckgefälles bereitgestellt wird.

Als Ventilüberschneidung wird dabei der Kurbelwinkelbereich bezeichnet, der dadurch gekennzeichnet ist, daß die Einlaßventile schon geöffnet sind, wobei die Auslaßventile aber noch nicht geschlossen wurden, so daß ein Teil der Luft durch den Zylinder strömt und ohne an der Hauptverbrennung teilzunehmen direkt in den Abgastrakt gelangt.

Bei dem erfindungsgemäßen Verfahren ermöglicht die Ventilüberschneidung in vorteilhafter Weise, daß die eigentliche Hauptverbrennung stöchiometrisch ablaufen kann, also kein Magerbetrieb der Brennkraftmaschine erforderlich ist, um die für die Oxidation des nacheingespritzten Kraftstoffes notwendige Luft in Form eines Luftüberschusses einer überstöchiometrischen Hauptverbrennung bereitzustellen. Der für die Verbrennung des nacheingespritzten Kraftstoffes erforderliche Sauerstoff wird während der Ventilüberschneidung dem Abgastrakt zugeführt. Insbesondere eine größere Überschneidung der Schließzeit des Auslasses und der Öffnungszeit des Einlasses gewährleistet neben der gewünschten Luftzufuhr für die Nachverbrennung auch eine weitgehende Restgasausspülung und eine größere Zylinderfüllung.

Das erfindungsgemäße Verfahren gestattet in der Hauptverbrennung sogar einen fetten Betrieb der Brennkraftmaschine d. h. eine unterstöchiometrische Verbrennung unter Luftmangel. Der Betrieb der Brennkraftmaschine, insbesondere die Einstellung des Luftverhältnisses, ist vollkommen unabhängig von einer vorzunehmenden Nacheinspritzung, so daß das Verfahren zur Steigerung des Drehmomentes unabhängig vom Betrieb der Brennkraftmaschine durchführbar ist.

Die Verbrennungsluft für die zweite Verbrennung wird durch das positive Spüldruckgefälle geliefert, das während der Ventilüberschneidung bei turboaufgeladenen Motoren im unteren Drehzahlbereich zu beobachten ist. Dabei fließt während der Ventilüberschneidungsphase Frischluft aus dem Einlaßkrümmer durch den Brennraum in den Auslaßkrümmer. Diesem Luftstrom fügt die Einspritzung eine passende Menge Kraftstoff zu.

Vorteilhaft sind insbesondere Ausführungsformen des Verfahrens, bei denen die Brennkraftmaschine mit einer Ventilüberschneidung von 0° bis 120° KW (Grad Kurbelwinkel), vorzugsweise mit einer Ventilüberschneidung von 40° bis 90° KW bzw. mit einer Ventilüberschneidung von 60° bis 80° KW betrieben wird.

Vorteilhaft sind Ausführungsformen des Verfahrens, bei denen bei der mit mindestens einer Nacheinspritzung betriebenen Brennkraftmaschine die Ventilüberschneidung im Vergleich zu einer ohne Nacheinspritzung herkömmlich betriebenen Brennkraftmaschine mit dem Ziel einer Vergrößerung der durchgespülten Luftmenge optimiert wird. Grundsätzlich können sich dabei auch Ventilüberschneidungen, die größer als 90°KW sind, als vorteilhaft erweisen, obwohl derartig große Ventilüberschneidungen nach dem Stand der Technik eher unüblich sind.

Diese Ausführungsform trägt dem Umstand Rechnung, daß das erfindungsgemäße Verfahren die Ventilüberschneidung - anderes als bei herkömmlichen Brennkraftmaschinen üblich - gezielt für die Zufuhr zusätzlicher Luft zur Oxidation des nacheingespritzten Kraftstoffes einsetzt und eine Optimierung der Ventilüberschneidung diese Luftzufuhr fördert und unterstützt.

Eine variable Ventilüberschneidung läßt sich in leichter Weise über einen zumindest teilweise variablen Ventiltrieb realisieren, wobei variable Ventiltriebe seit längerem in der Serienfertigung eingesetzt werden, so daß alle Vorraussetzungen für diese Verfahrensvariante bereits vorhanden sind und auch hier keine komplexen zusätzlichen Bauteile erforderlich sind.

Vorteilhaft sind auch Ausführungsformen des Verfahrens, bei denen die zusätzliche Verbrennungsluft ganz oder teilweise durch eine mechanische Sekundärlufteinblasung bereitgestellt wird. Eine gegebenenfalls bereits vorhandene Sekundärlufteinblasung, die zur Nachoxidation von Kohlenmonoxid und unverbrannter Kohlenwasserstoffe im Abgastrakt verwendet wird, kann hierzu verwendet werden.

Dabei kann die Sekundärlufteinblasung alternativ zu einer Ventilüberschneidung oder aber in Zusammenarbeit mit dieser Überschneidung für die Zufuhr zusätzlicher Luft genutzt werden.

Vorteilhaft sind Ausführungsformen des Verfahrens, bei denen die Nacheinspritzung 270° bis 450° KW nach dem oberen Totpunkt der Zündung (Zünd-OT), vorzugsweise 300° bis 360° KW nach dem oberen Totpunkt der Zündung (Zünd-OT), vorgenommen wird. Als Zünd-OT wird der obere Totpunkt bezeichnet, den der Kolben zwischen der Kompressionsphase und der Expansionsphase während der Verbrennung einnimmt.

Damit wird die Nacheinspritzung und die Verbrennung des nacheingespritzten Kraftstoffes von der Expansionsphase des Kolbens infolge der Hauptverbrennung hin in den Bereich des Ladungswechsels verschoben d.h. in Richtung Ladungswechsel-OT. Als Ladungswechsel-OT wird der obere Totpunkt bezeichnet, den der Kolben während des Ladungswechsels zwischen der Ausschiebephase und der Ansaugphase einnimmt.

Die Enthalpie der Verbrennungsgase wird erst im Abgastrakt selbst erhöht. Der Energieverlust infolge eines Wärmeüberganges von den heißen Verbrennungsgasen auf die Brennraumwände, der kontraproduktiv ist, da er der Enthalpiesteigerung des Abgasstromes entgegenwirkt, wird dadurch ebenfalls gesenkt.

Vorteilhaft sind insbesondere Ausführungsformen des Verfahrens, bei denen die mindestens eine Nacheinspritzung während einer Ventilüberschneidung, bei der sowohl die Einlaßventile als auch die Auslaßventile geöffnet sind, vorgenommen wird.

Vorteilhaft sind insbesondere Ausführungsformen des Verfahrens, bei denen die mindestens eine Nacheinspritzung 0°KW bis 20°KW vor dem Öffnen des mindestens einen Einlaßventils, vorzugsweise 0°KW bis 10°KW vor dem Öffnen des mindestens einen Einlaßventils, gestartet wird.

Vorteilhaft sind Ausführungsformen des Verfahrens, bei denen die mindestens eine Nacheinspritzung vorgenommen wird, nachdem die Hauptverbrennung infolge der Haupteinspritzung abgeschlossen wurde, so daß die nacheingespritzte Kraftstoffmenge nicht von der Flammenfront der Hauptverbrennung entzündet wird.

Vorteilhaft sind Ausführungsformen des Verfahrens, bei denen die mindestens eine Nacheinspritzung vorgenommen wird, nachdem die Hauptverbrennung infolge der Haupteinspritzung abgeschlossen wurde, so daß die nacheingespritzte Kraftstoffmenge nicht von den aus dieser Hauptverbrennung hervorgehenden Verbrennungsgasen entzündet wird.

Dadurch, daß diese Ausführungsformen des erfindungsgemäßen Verfahrens die Zündung des aus der zusätzlichen Luft und dem nacheingespritztem Kraftstoff gebildeten Gemisches nicht mittels der in demselben Zylinder noch ablaufenden Hauptverbrennung initiiert und diese Zündung auch nicht durch die hohen Temperaturen der im Rahmen dieser Hauptverbrennung gebildeten Verbrennungsgase erfolgen muß, gestattet das erfindungsgemäße Verfahren die freie d. h. kompromißlose Wahl des Einspritzzeitpunktes allein im Hinblick auf die gewünschte signifikante Steigerung des Drehmomentes bei niedrigen Drehzahlen.

Anders als bei dem in der DE 199 44 190 A1 beschriebenen Verfahren muß die Nacheinspritzung daher nicht zwangsläufig am Ende des Expansionshubes des Kolbens erfolgen, so daß eine Zündung infolge der Hauptverbrennung bzw. der hohen Temperaturen sichergestellt ist. Hierdurch wird die Nacheinspritzung von der Haupteinspritzung vollkommen entkoppelt, wobei der nacheingespritzte Kraftstoff in einer eigenen selbstständigen d. h. gezielt gezündeten Verbrennung umgesetzt wird.

## Patentansprüche

1. Verfahren zur Erhöhung des Drehmomentes bei einer direkteinspritzenden Brennkraftmaschine, die mit einem Abgasturbolader ausgestattet ist und bei der der Ladungswechsel mittels Ein- und Auslaßventilen gesteuert wird, wobei neben einer Haupteinspritzung, in deren Rahmen der Kraftstoff für die Hauptverbrennung bereitgestellt wird, mindestens eine Nacheinspritzung in einen oder mehrere Zylinder der Brennkraftmaschine vorgenommen wird und die im Rahmen der mindestens einen Nacheinspritzung zugeführte nacheingespritzte Kraftstoffmenge mit zusätzlicher Verbrennungsluft verbrannt wird, die nicht aus der ursprünglichen Zylinderfüllung stammt, sondern separat zugeführt wird,
**dadurch gekennzeichnet, daß**
die Verbrennung des nacheingespritzten Kraftstoffes im Abgastrakt vorgenommen wird und
■ die nacheingespritzte Kraftstoffmenge mittels der Verbrennungsgase eines anderen Zylinders der Brennkraftmaschine im Abgastrakt gezündet wird.

2. Verfahren nach Anspruch 1,
**dadurch gekennzeichnet, daß**
die zusätzliche Verbrennungsluft ganz oder teilweise während einer Ventilüberschneidungphase, bei der sowohl die Einlaßventile als auch die Auslaßventile geöffnet sind, infolge eines positiven Spüldruckgefälles bereitgestellt wird.

3. Verfahren nach Anspruch 2,
**dadurch gekennzeichnet, daß**
die Brennkraftmaschine mit einer Ventilüberschneidung von 0° bis 120° KW betrieben wird.

4. Verfahren nach Anspruch 2 oder 3,
**dadurch gekennzeichnet, daß**
die Brennkraftmaschine mit einer Ventilüberschneidung von 40° bis 90° KW betrieben wird.

5. Verfahren nach einem der Ansprüche 2 bis 4,
**dadurch gekennzeichnet, daß**
die Brennkraftmaschine mit einer Ventilüberschneidung von 60° bis 80° KW betrieben wird.

6. Verfahren nach einem der Ansprüche 2 bis 5,
**dadurch gekennzeichnet, daß**
bei der mit mindestens einer Nacheinspritzung betriebenen Brennkraftmaschine die Ventilüberschneidung im Vergleich zu einer ohne Nacheinspritzung herkömmlich betriebenen Brennkraftmaschine mit dem Ziel einer Vergrößerung der durchgespülten Luftmenge optimiert wird.

7. Verfahren nach einem der vorherigen Ansprüche,
**dadurch gekennzeichnet, daß**
die zusätzliche Verbrennungsluft ganz oder teilweise durch eine mechanische Sekundärlufteinblasung bereitgestellt wird.

8. Verfahren nach einem der vorherigen Ansprüche,
**dadurch gekennzeichnet, daß**
die mindestens eine Nacheinspritzung 270° bis 450° KW nach dem oberen Totpunkt der Zündung (Zünd-OT) vorgenommen wird.

9. Verfahren nach einem der vorherigen Ansprüche,
**dadurch gekennzeichnet, daß**
die mindestens eine Nacheinspritzung 300° bis 360° KW nach dem oberen Totpunkt der Zündung (Zünd-OT) vorgenommen wird.

10. Verfahren nach einem der vorherigen Ansprüche,
**dadurch gekennzeichnet, daß**
die mindestens eine Nacheinspritzung während einer Ventilüberschneidung, bei der sowohl die Einlaßventile als auch die Auslaßventile geöffnet sind, vorgenommen d. h. gestartet wird.

11. Verfahren nach einem der Ansprüche 1 bis 9,
**dadurch gekennzeichnet, daß**
die mindestens eine Nacheinspritzung 0°KW bis 10°KW vor dem Öffnen des mindestens einen Einlaßventils gestartet wird.

12. Verfahren nach einem der vorherigen Ansprüche,
**dadurch gekennzeichnet, daß**
die mindestens eine Nacheinspritzung vorgenommen wird, nachdem die Hauptverbrennung infolge der Haupteinspritzung abgeschlossen wurde, so daß die nacheingespritzte Kraftstoffmenge nicht von der Flammenfront der Hauptverbrennung entzündet wird.

13. Verfahren nach einem der vorherigen Ansprüche,
**dadurch gekennzeichnet, daß**
die mindestens eine Nacheinspritzung vorgenommen wird, nachdem die Hauptverbrennung infolge der Haupteinspritzung abgeschlossen wurde, so daß die nacheingespritzte Kraftstoffmenge nicht von den aus dieser Hauptverbrennung hervorgehenden Verbrennungsgasen entzündet wird.

## Claims

1. Method for increasing the torque in a direct-injection internal combustion engine which is fitted with an exhaust-gas turbocharger and in which the charge exchange is controlled by means of inlet and outlet valves, wherein in addition to a main injection, during which the fuel for the main combustion is provided, at least one post-injection is carried out into one or more cylinders of the internal combustion engine, and the post-injected fuel quantity supplied during the at least one post-injection is burned with additional combustion air that does not originate from the original cylinder charge but rather is supplied separately,
**characterized in that**
• the combustion of the post-injected fuel is carried out in the exhaust section and
• the post-injected fuel quantity is ignited in the exhaust section by means of the combustion gases of another cylinder of the internal combustion engine.

2. Method according to Claim 1,
**characterized in that**
the additional combustion air is provided entirely or partially during a valve overlap phase, in which both the inlet valves and also the outlet valves are open, as a result of a positive scavenging pressure gradient.

3. Method according to Claim 2,
**characterized in that**
the internal combustion engine is operated with a valve overlap of 0° to 120° CA.

4. Method according to Claim 2 or 3,
**characterized in that**
the internal combustion engine is operated with a valve overlap of 40° to 90° CA.

5. Method according to one of Claims 2 to 4,
**characterized in that**
the internal combustion engine is operated with a valve overlap of 60° to 80° CA.

6. Method according to one of Claims 2 to 5,
**characterized in that,**
in the internal combustion engine that is operated with at least one post-injection, the valve overlap is optimized, in relation to an internal combustion engine that is operated conventionally without a post-injection, with the aim of increasing the purged air quantity.

7. Method according to one of the preceding claims,
**characterized in that**
the additional combustion air is provided entirely or partially by means of a mechanical secondary air injection.

8. Method according to one of the preceding claims,
**characterized in that**
the at least one post-injection is carried out 270° to 450° CA after ignition top dead centre (ITDC).

9. Method according to one of the preceding claims,
**characterized in that**
the at least one post-injection is carried out 300° to 360° CA after ignition top dead centre
(ITDC).

10. Method according to one of the preceding claims,
**characterized in that**
the at least one post-injection is carried out, that is to say started, during a valve overlap in which both the inlet valves and also the outlet valves are open.

11. Method according to one of Claims 1 to 9,
**characterized in that**
the at least one post-injection is started 0°CA to 10°CA before the opening of the at least one inlet valve.

12. Method according to one of the preceding claims,
**characterized in that**
the at least one post-injection is carried out after the main combustion as a result of the main injection has ended, such that the post-injected fuel quantity is not ignited by the flame front of the main combustion.

13. Method according to one of the preceding claims,
**characterized in that**
the at least one post-injection is carried out after the main combustion as a result of the main injection has ended, such that the post-injected fuel quantity is not ignited by the combustion gases arising from said main combustion.

## Revendications

1. Procédé pour augmenter le couple dans un moteur à combustion interne à injection directe, qui est muni d'une turbosoufflante à gaz d'échappement et dans lequel le changement de charge est commandé au moyen de soupapes d'admission et d'échappement, une injection principale au cours de laquelle le carburant pour la combustion principale est fourni s'accompagnant d'au moins une post-injection dans un ou plusieurs cylindres du moteur à combustion interne, et la quantité de carburant post-injectée et acheminée dans le cadre de l'au moins une post-injection étant brûlée avec un apport supplémentaire d'air de combustion, qui ne provient pas du remplissage initial du cylindre, mais qui est acheminé séparément,
**caractérisé en ce que**
- la combustion du carburant post-injecté est effectuée dans la voie des gaz d'échappement, et
- la quantité de carburant post-injectée est allumée au moyen des gaz de combustion d'un autre cylindre du moteur à combustion interne dans la voie des gaz d'échappement.

2. Procédé selon la revendication 1,
**caractérisé en ce que**
l'air de combustion supplémentaire est fourni complètement ou partiellement pendant une phase de recoupement des soupapes dans laquelle à la fois les soupapes d'admission et les soupapes d'échappement sont ouvertes, suite à un gradient de pression de balayage positif.

3. Procédé selon la revendication 2,
**caractérisé en ce que**
le moteur à combustion interne est entraîné avec un recoupement des soupapes de 0° à 120° d'angle de vilebrequin.

4. Procédé selon la revendication 2 ou 3,
**caractérisé en ce que**
le moteur à combustion interne est entraîné avec un recoupement des soupapes de 40° à 90° d'angle de vilebrequin.

5. Procédé selon l'une quelconque des revendications 2 à 4,
**caractérisé en ce que**
le moteur à combustion interne est entraîné avec un recoupement des soupapes de 60° à 80° d'angle de vilebrequin.

6. Procédé selon l'une quelconque des revendications 2 à 5,
**caractérisé en ce que**
dans le cas du moteur à combustion interne entraîné avec au moins une post-injection, le recoupement des soupapes, par comparaison avec un moteur à combustion interne entraîné de manière usuelle sans post-injection, est optimisé dans le but d'augmenter la quantité d'air balayé.

7. Procédé selon l'une quelconque des revendications précédentes,
**caractérisé en ce que**
l'air de combustion supplémentaire est fourni complètement ou partiellement par un soufflage mécanique d'air secondaire.

8. Procédé selon l'une quelconque des revendications précédentes,
**caractérisé en ce que**
l'au moins une post-injection est effectuée 270° à 450° d'angle de vilebrequin après le point mort haut de l'allumage (PMH d'allumage).

9. Procédé selon l'une quelconque des revendications précédentes,
**caractérisé en ce que**
l'au moins une post-injection est effectuée 300° à 360° d'angle de vilebrequin après le point mort haut de l'allumage (PMH d'allumage).

10. Procédé selon l'une quelconque des revendications précédentes,
**caractérisé en ce que**
l'au moins une post-injection est effectuée, c'est-à-dire commencée, pendant un recoupement des soupapes, dans lequel à la fois les soupapes d'admission et les soupapes d'échappement sont ouvertes.

11. Procédé selon l'une quelconque des revendications 1 à 9,
**caractérisé en ce que**
l'au moins une post-injection est commencée 0° à 10° d'angle de vilebrequin avant l'ouverture d'au moins une soupape d'admission.

12. Procédé selon l'une quelconque des revendications précédentes,
**caractérisé en ce que**
l'au moins une post-injection est effectuée après la fin de la combustion principale suite à l'injection principale, de sorte que la quantité de carburant post-injectée ne soit pas éteinte par le front de flamme de la combustion principale.

13. Procédé selon l'une quelconque des revendications précédentes,
**caractérisé en ce que**
l'au moins une post-injection est effectuée après la fin de la combustion principale suite à l'injection principale, de sorte que la quantité de carburant post-injectée ne soit pas éteinte par les gaz de combustion produits lors de cette combustion principale.
